# EUROPEAN PATENT APPLICATION

(11) **EP 2 043 223 A2**
(43) Date of publication of application: **01.04.2009**
(21) Application number: 08160541.2
(22) Date of filing: 16.07.2008
(51) Int. Cl.: H02J 7/00

(54) **Battery holder for charging a battery from different sources, and respective battery recharging method**

(30) Priority: 28.09.2007 KR 20070098138
(71) Applicant: Samsung Electronics Co., Ltd., Suwon-si, Gyeonggi-do (KR)
(72) Inventor: Kim, Hyoung Sup, Suwon-si, Gyeonggi-do (KR)
(74) Representative: Harrison Goddard Foote

(57) **Abstract**

An adaptive battery holder, a battery recharging system, and a battery charging method are provided. The battery recharging condition is set according to the type of externally connected device (PC,TA) connected to the battery holder, so that the battery can be rapidly and optimally recharged and the externally connected device can be stably operated.

## Description

### BACKGROUND OF THE INVENTION

### 1. Field of the Invention:

The present invention relates to battery recharging technology. More particularly, the present invention relates to an adaptive battery holder that can set recharging conditions according to the type of device externally connected to the adaptive battery holder.

### 2. Description of the Related Art:

In recent years, the use of portable terminals has increased dramatically because they are easily accessible and because they can be easily carried and store a variety of programs. In particular, portable terminals provide a voice call service and the number of users and service subscribers has rapidly increased.

Conventional portable terminals often become large and heavy in order to stabilize the battery and other electronic parts. Recently, as electronic parts and batteries have become more advanced, the portable terminals have been reduced in size, weight and thickness.

In order to recharge the batteries, the portable terminals are connected by a cable to a recharging adapter. The portable terminals include a connector interface that can be connected to the cable. The connector interface can be used as a power supply path between the portable terminals and the recharging adapter. It may also be utilized as a communication channel for supporting USB communication of the portable terminals.

Because both a recharging cable and a USB communication cable can be connected to the connector interfaces, portable terminals need to identify which type of cable is connected. That is, if the cable connected to their connector interfaces is connected in order to provide recharge power to their batteries or to perform USB communication. To this end, the conventional portable terminals include an additional part that can identify the type of external devices connected to the connector interfaces. However, this configuration forces the conventional portable terminal to increase in size, which in turn causes complicated manufacturing processes. Therefore, an improved method is required to identify the externally connected device and to properly recharge a portable terminal battery without adding additional parts in the portable terminal.

### SUMMARY OF THE INVENTION

An aspect of the present invention is to address at least the above-mentioned problems and/or disadvantages and to provide at least the advantages described below. Accordingly, an aspect of the present invention is to provide an adaptive battery holder that can recharge a battery using power output from an externally connected device and can electrically stabilize the externally connected device. A further aspect of the present invention is to provide a battery recharging system that includes the adaptive battery holder. Still a further aspect of the present invention is to provide a method for recharging a battery using the adaptive battery holder.

In accordance with an aspect of the present invention, a battery recharging method is provided. The recharging method includes connecting a battery holder to an external device, detecting a signal change on at least one signal line when the battery holder is connected to the external device, identifying the type of externally connected device, based on the detected signal change, setting a recharging condition in the battery holder, according to the identified externally connected device and recharging a battery in the battery holder, according to the set recharging condition.

In accordance with another exemplary embodiment of the present invention, a battery recharging system is provided. The battery recharging system includes an external device that can supply power, and a battery holder for receiving power from the external device. In an exemplary implementation, the battery holder, connected to the external device, sets a recharging condition according to the type of externally connected device and recharges a battery based on the set recharging condition.

In accordance with yet another exemplary embodiment of the present invention, an adaptive battery holder is provided. The battery holder including signal lines connected to an external device, a controller for identifying the type of externally connected device according to a signal change on at least one of the signal lines and for setting the recharging condition based on the identified externally connected device, and a power line for supplying power to the battery according to the set recharging condition.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 is a view illustrating a structure of externally connected interfaces for a laptop and a recharging adaptor according to an exemplary embodiment of the present invention;

FIG. 2 is a schematic view illustrating elements in a battery recharging system according to an exemplary embodiment of the present invention;

FIG. 3 is a schematic block diagram illustrating an inner structure of an adaptive battery holder according to an exemplary embodiment of the present invention;

FIG. 4 is a schematic block diagram illustrating a controller of an adaptive battery holder according to an exemplary embodiment of the present invention;

FIG. 5A and FIG. 5B are views illustrating the signal lines of a controller of an adaptive battery holder according to an exemplary embodiment of the present invention; and

FIG. 6 is a flow chart describing a battery recharging method according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms or words used in the present description and the claims should not be limited by a general or lexical meaning, but instead should be analyzed as a meaning and a concept through which the inventor defines and describes exemplary embodiments of the present invention with his best effort, to comply with the idea of the present invention. Therefore, one skilled in the art will understand that the embodiments disclosed in the description and configurations illustrated in the drawings are only exemplary or preferred embodiments, and that there may be various modifications, alterations, and equivalents thereof at the time of filing this application.

For example, an external device, connected to an adaptive battery holder according to an exemplary embodiment of the present invention, may be a recharging adapter or a laptop computer. However, it should be understood that such an externally connected device, modified to the adaptive battery holder and a battery recharging method using the adaptive battery holder according to the present invention, may be other electronic devices, such as PDA's, desktop computers, game devices, etc., as well as laptop computers. That is, the term "externally connected devices" refers to any device that can be connected to the battery holder and supply power to electronic devices or perform communication with electronic devices. The battery recharging method according to exemplary embodiments of the present invention can set a variety of battery recharging conditions depending on respective externally connected devices, or can recharge batteries according to the types of externally connected devices.

A controller is included in the adaptive battery holder according to exemplary embodiments of the present invention. The controller can detect a voltage to identify the type of externally connected device or a voltage that is changed as an external device is connected to the adaptive battery holder. The controller can control an amount of current flowing between the externally connected device and the adaptive battery holder. In an exemplary implementation, the controller is configured to include resistors and switches and the controller may be operated by an algorithm that controls the resistors and the switches. The controller may have an integrated chip (IC) used for controlling the recharging of the battery.

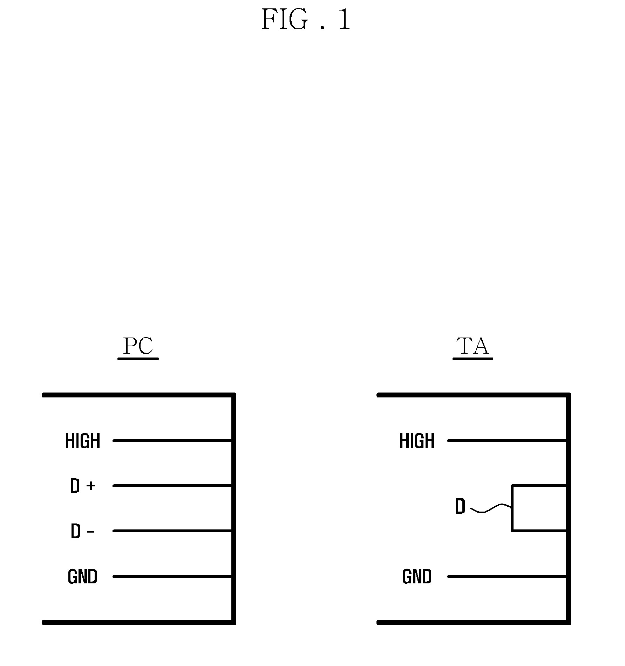

USB interfaces of a computer and a recharging adapter are connected to the adaptive battery holder. The computer and the recharging adapter supply power to the adaptive battery holder. The computer may be a laptop computer. Such USB interfaces are described briefly with reference to FIG. 1.

FIG. 1 is a view illustrating a structure of an externally connected interface for a computer and a recharging adaptor according to an exemplary embodiment of the present invention.

As shown in FIG. 1, the USB interface of the computer is configured to include four signal lines. That is, a first signal line D+, a second signal line D-, a power line HIGH and a ground line GND. When the USB interface of the computer is connected to an external device, it transmits and receives signals to and from the externally connected device through the first and second signal lines D+ and D-. On the other hand, the USB interface of the recharging Travel Adapter (TA) is configured to include a power line HIGH, a ground line GND and a short line D. The short line D connects between a first signal line D+ and a second signal line D- in the USB interface of the recharging adapter TA, which correspond to the first signal line D+ and the second signal line D- of the USB interface of the computer. The short is provided because the recharging adapter TA does not serve to transmit or receive a signal to or from an externally connected device. Accordingly, the array of signal lines is different between the USB interface of the computer and the USB interface of the recharging adapter TA.

A system for recharging a battery, according to an exemplary embodiment of the present invention, is described in more detail as follows, with reference to the structure of the USB interfaces of the computer and the recharging adapter TA as described above.

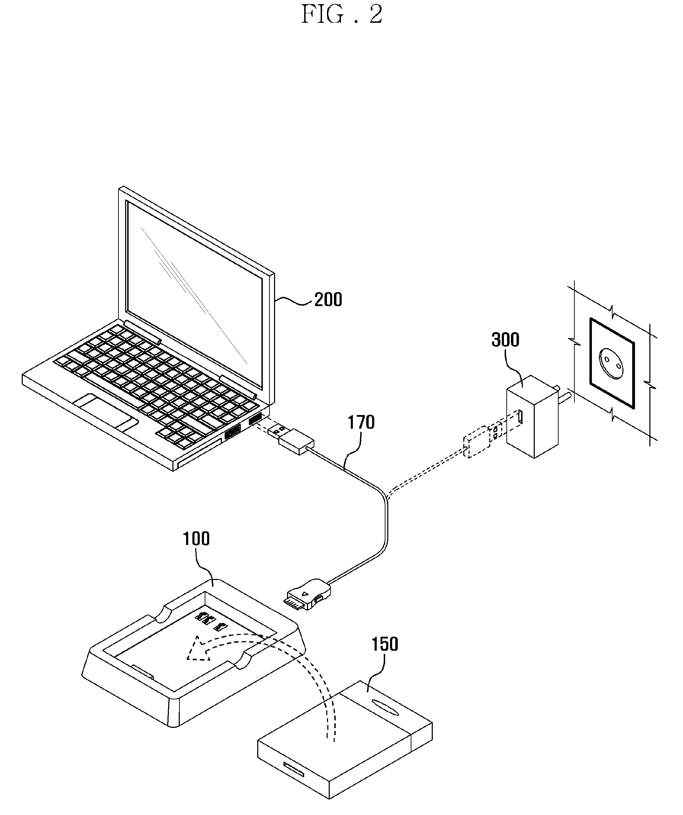

FIG. 2 is a schematic view illustrating elements in a battery recharging system according to an exemplary embodiment of the present invention.

For convenience of description, a computer is explained based on a laptop computer 200 as an exemplary embodiment. A battery holder 100 holds a battery 150 and the battery holder 100 is connected to a cable 170 to recharge the battery 150.

When the battery holder 100 is connected to an external device, for example a laptop computer 200 or a recharging adaptor 300, the battery recharging system using the battery holder of the present invention monitors the change of transmitted/received signals. The battery recharging system determines the type of externally connected device based on the monitored value. After that, the battery recharging system determines the battery recharging conditions based on the determined result and recharges the battery 150. That is, when the battery 150 is recharged using the laptop computer 200, the battery holder 100 recharges the battery 150 using a first recharging voltage and/or current supplied from the laptop computer 200. When the battery 150 is recharged using the recharging adapter 300, the battery holder 100 recharges the battery 150 using a second recharging voltage and/or current supplied from the recharging adapter 300. Here, the first recharging current is an amount of current that serves to stably supply external power without causing an error in the laptop computer 200. The first recharging current can be set according to the laptop computer's performance, manufacturer's guidelines, user preference, and the like. For example, the first recharging current may be 500 mA. The second recharging current may be an amount of rated current supported by the recharging adapter 300, the battery holder 100 or the battery 150, for example a range of current of 700∼1400 mA. The battery holder 100 can recharge the battery 150 using such an amount of rated current.

As shown in FIG. 2, the battery recharging system includes a battery 150, a battery holder 100 for holding the battery 150, and a cable 170 for connecting the laptop computer 200 or the recharging adapter 300 to the battery holder 100.

The battery 150 is coupled and supplies power to the external electronic device and its respective parts. Such a battery 150 may be manufactured as a secondary battery or a chemical battery that can be recharged many times. The battery 150 according to an exemplary embodiment of the present invention may be recharged by an externally connected device, i.e., a recharging adapter 300, a laptop computer 200 and the like.

The battery holder 100 includes a space or cavity in which the battery 150 is placed and includes an interface to which the cable 170 is connected. The battery 150 is placed in the space and electrically connected to the battery holder 100. It is preferable that the battery holder 100 is shaped to secure the battery 150 in place. In particular, the battery holder 100 has a terminal including one or more pads that can be connected to the electrodes of the battery 150. When the terminal of the battery holder 100 is connected to the electrodes of the battery 150, the battery holder 100 can receive power from an external source and supply power to recharge the battery 150 through the terminal and the electrodes. In order to indicate a recharging state of the battery 150, the battery holder 100 may further include at least one lamp, such as an LED. The lamp can emit a different color light according to the recharging state. A more detailed configuration of the battery holder 100 will be described later with reference to the attached drawings.

When the laptop computer 200 is connected to the battery holder 100 in which the battery 150 is placed, it supplies power to the battery holder 100 so that the battery 150 can be recharged. Alternatively, when the laptop computer 200 is connected by the cable 170 to an externally connected device other than the battery holder 100, such as a portable terminal that can perform communication, it can communicate with the externally connected device using the USB interface. On the other hand, the laptop computer 200 uses internal power that can be set according to a certain reference or standard value. That is, the laptop computer 200 can use a rated voltage and rated current to perform internal signal transmission and reception. Therefore, it is preferable that the laptop computer 200 supplies power to the battery holder 100 while maintaining the rated voltage and rated current that are defined in the standard of the laptop computer 200. However, when the laptop computer 200 supplies power externally without maintaining the rated voltage and rated current, it can cause a serious system error or damage.

The recharging adapter 300 connects to the battery holder 100 via the cable 170 and also connects to a power receptacle such as an outlet mounted on a wall. The recharging adapter 300 receives and regulates power from the receptacle and supplies it to the battery holder 100. In order to recharge the battery 150 at a high speed, the recharging adapter 300 can supply power to the battery holder 100 using a maximum rated current that is allowable by the battery holder 100 and the battery 150.

The cable 170 includes a first connecting unit that is connected to the battery holder 100, a second connecting unit that is connected to the laptop computer 200 or the recharging adapter 300, and a connecting line for connecting the first and second connecting units. The first connecting unit may form a hook-type structure at its one end, which is coupled to the battery holder 100. The first connecting unit may also include an operating part such as a release mechanism for easily separating the hook-type structure from the battery holder 100. The second connecting unit has a structure that can be coupled to the laptop computer 200 or the recharging adapter 300, for example a USB interface.

In the battery recharging system according to an exemplary embodiment of the present invention, the battery 150 is placed in the battery holder 100 so that the electrodes of the battery 150 are connected to the terminal of the battery holder 100, and the battery holder 100 is connected to an external device via the cable 170. The battery holder 100 identifies the type of externally connected device based on the format of the USB interface of the externally connected device. After that, the battery holder 100 determines an amount of rated current for recharging the battery 150, based on the identification result, and recharges the battery 150. Therefore, the battery recharging system according to an exemplary embodiment of the present invention can recharge a battery, regardless of the type of externally connected device, and maintain the stability of the externally connected device.

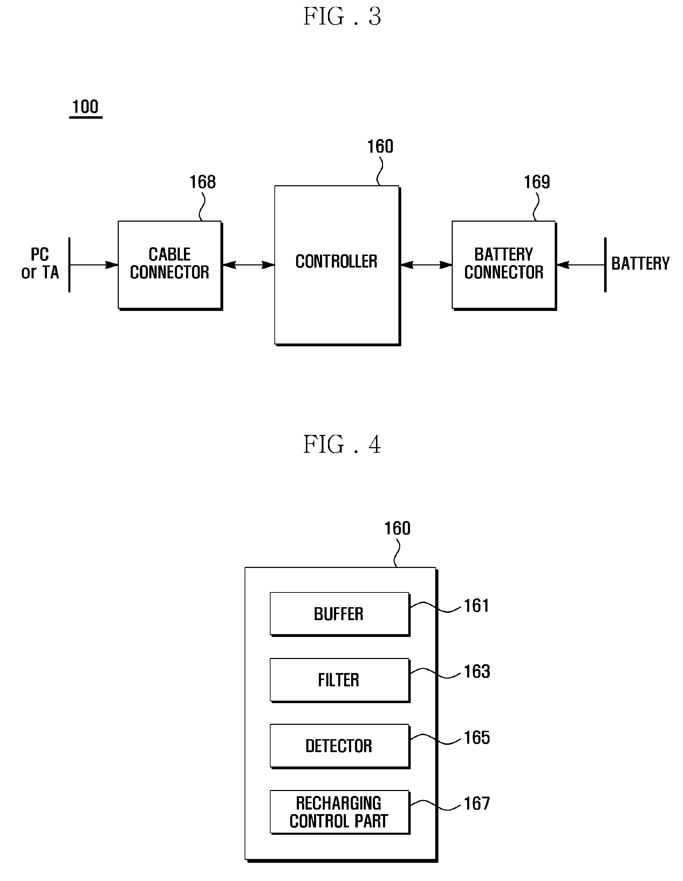

FIG. 3 is a schematic block diagram illustrating an inner structure of an adaptive battery holder 100 according to an exemplary embodiment of the present invention.

Referring to FIG. 3, the battery holder 100 includes a cable connector 168, a controller 160 and a battery connector 169. The cable connector 168 is connected to an external device, i.e., a laptop computer, a recharging adapter TA and the like. The controller 160 identifies the type of external device connected to the cable connector 168, determines an amount of recharging current based on a preset recharging method, and supplies the recharging power to the battery 150 based on the amount of recharging current. The battery connector 169 serves to electrically connect the battery 150 and the controller 160.

The cable connector 168 is a structure that connects the cable 170, connected to an external device, with the battery holder 100. It is preferable that the structure of the cable connector 168 allows for its connection to the second connecting unit of the cable 170. In an exemplary implementation, the cable connector 168 is integrally formed with the cable 170. In that case, the cable 170 is formed as a part of the battery holder 100. It is preferable that the cable connector 168 includes connecting terminals corresponding to pins of the second connecting unit of the cable 170. It is also preferable that the cable connector 168 has a structure to stably receive and secure the second connecting unit. For example, when the second connecting unit is formed having a hook-type structure, the cable connector 168 is shaped to include a passage to receive the hook-type structure, a step for locking it when completing the coupling therebetween and a mechanism for unlocking it as needed.

The battery connector 169 includes terminals that can be connected to electrodes formed on the battery 150. That battery connector 169 includes a placing part in which the battery 150 is placed and secured. In an exemplary implementation, the number of terminals of the battery connector 169 is the same as the number of electrodes of the battery so that they can directly correspond to one another. However, it should be understood that the battery connector 169 can be formed to include additional terminals in various locations to be compatible with other types of batteries. The placing part may include a groove at its one side so that the battery 150 can be easily taken in and out. The placing part may also include a protrusion at one side so that the battery 150 can be tightly secured therein. In that case, the battery 150 may include a groove corresponding to the protrusion for coupling in the placing part.

The controller 160 determines an amount of current flowing to the battery 150 according to whether the cable connector 168 is connected to a laptop computer or a recharging adapter TA. After that, the controller 160 controls the recharging operation of the battery 150 based on the determined amount of current. To this end, the controller 160 includes elements as shown in FIG. 4.

FIG. 4 is a schematic block diagram illustrating a controller of an adaptive battery holder according to an exemplary embodiment of the present invention.

Referring to FIG. 4, the controller 160 includes a buffer 161, a filter 163, a detector 165 and a recharging control part 167. The buffer 161 and filter 163 serve to enhance the stability of the controller 160, so they can be removed from the controller 160.

When a device is externally connected to the battery holder 100, the buffer 161 buffers signals output from the externally connected device. That is, when a voltage is supplied from the externally connected device, the buffer 161 buffers the voltage to prevent the internal circuit of the controller 160 from being damaged. The buffer 161 can also protect the circuit against high voltages that may be generated when the external device is connected to the battery holder 100, for example static electricity. The buffer 161 can be omitted from the controller according to the design purpose.

The filter 163 is provided to improve the signal received from the external device. For example, the filter 163 may remove ripples from the signals transmitted from the externally connected device, block AC signals, and rectify input signals. The filter 163 transmits the filtered signals from the externally connected device to the detector 165. The filter 163 can be omitted from the controller according to the design purpose.

The detector 165 detects a signal generated when the external device is connected to the battery holder, identifies the type of externally connected device (i.e., a laptop computer, a recharging adapter TA, etc.) and transmits the identification result to the recharging control part 167. For example, when a recharging adapter TA is connected to the battery holder, the detector 165 may detect a high voltage through a power line. Furthermore, when a laptop computer is connected to the battery holder, the detector 165 may detect a communication signal through a signal line. In an exemplary implementation, when a laptop computer is connected to the battery holder, the detector 165 may detect a change of a preset voltage in a signal line to identify that a laptop computer is externally connected.

The recharging control part 167 determines an amount of recharging current for the battery 150 according to the detected signal. In an exemplary implementation, the recharging control part 167 can control the amount of recharging current using a recharging IC. The recharging control part 167 may also control the amount of recharging current using a resistor and a switch. Controlling the amount of recharging current using a resistor and a switch is described in more detail as follows. When the externally connected device is a laptop computer, the recharging control part 167 connects a power line HIGH, arrayed in the controller, to a resistor of a certain resistance by switching. Therefore, the amount of recharging current, output from the laptop computer, can be controlled. When the externally connected device is a recharging adapter TA, the recharging control part 167 disconnects a power line from a resistor by switching or maintains a disconnection state between the power line and the resistor. Therefore, the battery 150 can be recharged based on the amount of current output from the recharging adapter TA. The controller 160 of the battery holder 100 is described in more detail as follows.

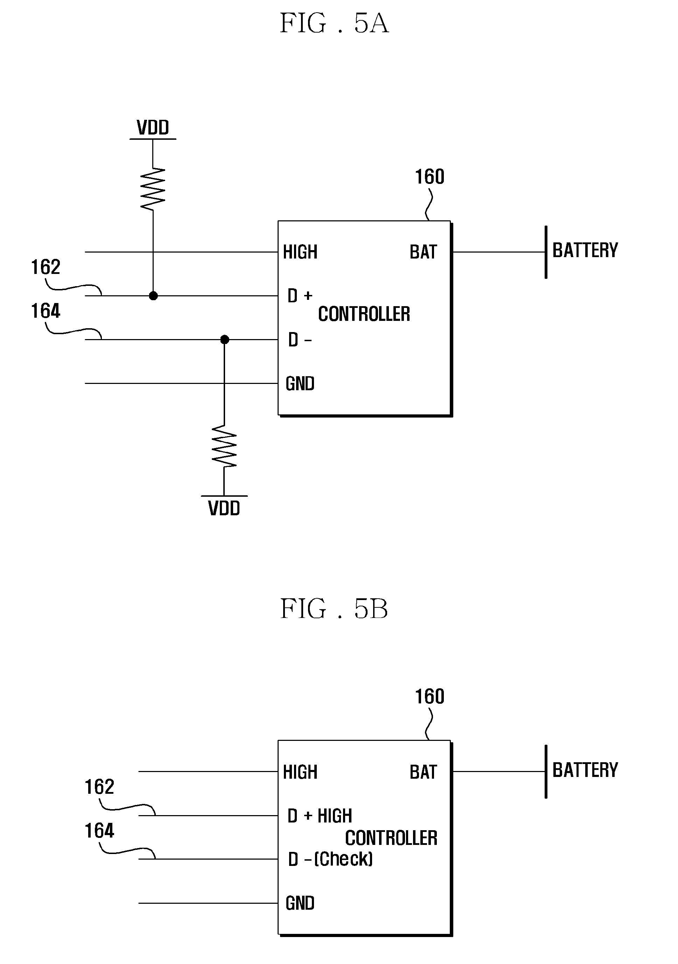

FIG. 5A and FIG. 5B are views illustrating signal lines of a controller 160 of an adaptive battery holder 100 according to an exemplary embodiment of the present invention.

As shown in FIG. 5A, the controller 160 includes a power line HIGH, a first signal line 162, a second signal line 164, a ground line GND and a battery recharging line BAT.

At least one of the first and second signal lines 162 and 164 is biased by a pull up voltage VDD. When an external device is connected to the battery holder, the pull up voltage VDD may be changed into a pull down voltage. The controller 160 detects such a voltage change and then determines the type of externally connected device. In order to change the pull up voltage biased in the signal lines into a pull down voltage, it is preferable that the signal lines have a resistor whose resistance is larger than that of the externally connected device.

In the following description, an exemplary method of recharging the battery 150, when an externally connected device is a laptop computer, is explained in more detail with reference to FIG. 5A and FIG. 1. That is, when a laptop computer used as an externally connected device is connected to the battery holder, the power line HIGH and the ground line GND of the controller 160 are connected to the power line and the ground line of the laptop computer, respectively. Furthermore, the first and second signal lines 162 and 164 of the controller 160 are connected to the first and second signal lines D+ and D- of the laptop computer, respectively. Therefore, the pull up voltage, biased in the first and second signal lines 162 and 164, is changed into a pull down voltage. The controller 160 concludes that the external device, currently connected to the battery holder, is a laptop computer according to the change of the pull up voltage that is biased in the first and second signal lines 162 and 164. Then the controller 160 determines an amount of recharging current based on the conclusion. As described above, the controller 160 controls the amount of recharging current using a method that connects a resistor to the power line for supplying power or using a recharging IC chip. The controller 160 supplies power of the power line HIGH to the battery recharging line BAT, based on the controlled amount of recharging current, so that the battery 150 can be recharged by power output from the laptop computer. The controller 160 controls the amount of recharging current, thereby stably protecting the laptop computer.

In the following description, an exemplary method of recharging the battery 150, when an externally connected device is a recharging adapter TA, is explained in more detail with reference to FIG. 5A and FIG. 1. That is, when a recharging adapter TA is connected to the battery holder, the first and second signal lines 162 and 164 of the controller 160 are connected to the signal line D of the recharging adapter TA, so that the first and second signal lines 162 and 164 are shorted together. Therefore, when the pull up voltage is biased in the first and second signal lines 162 and 164, it is not changed but maintained. Thus, when power is supplied to the power line HIGH of the controller 160 without change of the signal in the first and second signal lines 162 and 164, the controller 160 concludes that a recharging adapter TA is connected to the battery holder. Therefore, the controller 160 can recharge the battery 150 based on an amount of recharging current that is supplied from the recharging adapter TA, without the additional controlling operation for the amount of recharging current. The controller 160 may control an amount of recharging current supplied from the recharging adapter TA, as occasion demands, for example, to protect the battery 150. The controller 160 supplies power of the power line HIGH to the battery recharging line BAT, thereby recharging the battery 150. That is, the controller 160 can rapidly and stably recharge the battery 150, based on the optimum amount of recharging current supplied from the recharging adapter TA.

When the controller 160 recharges the battery 150, it can control the amount of recharging current step by step. That is, when the amount of remaining battery charge has almost run out, the controller 160 recharges the battery using the maximum amount of recharging current. After that, when determining that the battery 150 is recharged to more than a certain level, the controller 160 reduces the amount of recharging current to a certain amount and then recharges the battery at the reduced amount of recharging current. When the externally connected device recharging the battery 150 is a laptop computer, the controller 160 may set the amount of recharging current to a first amount of recharging current, for example, 500 mA, and then allow the battery 150 to be recharged by power output from the laptop computer. After that, when the battery 150 is recharged to a certain level, the controller 160 may set the amount of recharging current to a second amount, for example, 300 mA and then allow the battery 150 to be recharged by power output from the laptop computer. Such a controlling operation is to reduce the possibility of program errors, a system performance drop, a reduction of element life span, etc., which may be generated when the maximum amount of recharging current is continually provided to the battery 150 during the recharging operation. This also increases the stability of the laptop computer. When the battery 150 is recharged though a laptop computer in an exemplary embodiment of the present invention, the first and second amounts of recharging current are set and then the battery recharging is performed based on these set amounts. However, it should be understood that the present invention is not limited to this example. The amount of recharging current can be set to a variety of levels, and the controller 160 of the battery holder 100 can rapidly and easily recharge the battery 150 based on these different set amounts of recharging current, which ultimately secures the stability of the laptop computer.

Exemplary embodiments of the present invention, as described above, are implemented in such a way that the controller 160 of the battery holder 100 connects a resistor to the power line to control an amount of recharging current, according to the type of externally connected device. However, the embodiment can be modified in such a way to semi-permanently connect the resistor to the power line and to thus control the amount of recharging current. That is, when a laptop computer is connected to the battery holder, the controller 160 can maintain the amount of current at a certain value, through the connected resistor. When a recharging adapter TA is connected to the battery holder, the controller 160 supplies power from the recharging adapter TA to the battery 150 placed in the battery holder 100. The power, however, is not affected by the function of the resistor, so that the battery 150 can be recharged by the maximum amount of recharging current flowing out from the recharging adapter TA.

As shown in FIG. 5A, the controller 160 is implemented in such a way to determine whether an external device is connected to the battery holder by inputting the pull up voltage biased in at least one of the connected signal lines. In another exemplary embodiment, the controller 160, as shown in FIG. 5B, can be modified in such way that it can directly determine a voltage in the signal lines, without the use of the pull up voltage, and determine whether an external device is connected to the battery holder.

In particular, as shown in FIG. 5B, the controller 160 may supply a high voltage to a first signal line D+ (162) and then check a second signal line D- (164) to determine whether an external device is connected to the battery holder and to identify the type of the externally connected device. For example, when an external device is connected to the battery holder and the controller 160 supplies a high voltage to the first signal line D+ and detects the high voltage on the second signal line D-, it concludes that a recharging adapter is currently connected to the battery holder. In the case of the connection of the recharging adapter, the high voltage on the second signal line is detected because the first signal line is shorted to the second signal line. On the other hand, when the controller supplies a high voltage to the first signal line D+ and detects a low voltage on the second line D-, it concludes that a laptop computer is currently connected to the battery holder.

A battery recharging method using the battery holder, according to an exemplary embodiment of the present invention, is described in more detail as follows.

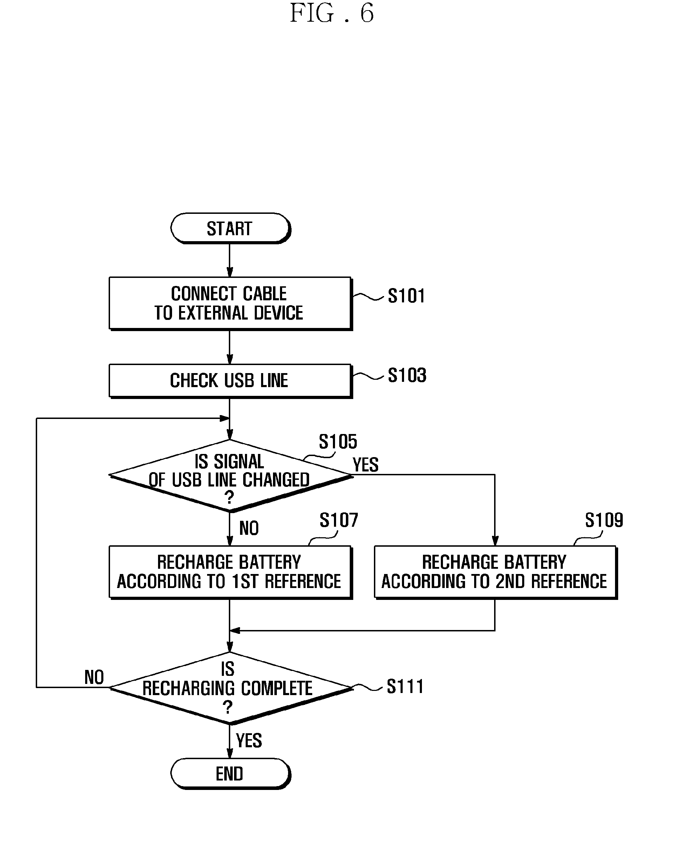

FIG. 6 is a flow chart describing a battery recharging method according to an exemplary embodiment of the present invention.

Referring to FIG. 6, when the cable 170 is connected to an external device in step S101, the controller 160 of the battery holder 100 checks the USB line (i.e., at least one of the first signal line 162 and the second signal line 164) in step S103.

As described above, the externally connected device may be any of a variety of electronic devices that preferably have a power source that can recharge a battery. The cable 170 may be an electric part that can electrically connect between the externally connected device and the battery holder 100 and may be integrally formed with the battery holder 100. The cable 170 connects one of its ends to a port of the external device, for example, a USB port, and its other end to a port of the battery holder 100.

Step S103 may be modified in such a way that the controller 160 checks only the first signal line 162 or only the second signal line 164. That is, the controller 160 checks one of the first and second signal lines 162 and 164, which is biased by a pull up voltage.

The controller 160 determines whether a signal change occurs in the USB line in step S105. When a signal change has not occurred at step S105, the controller 160 recharges the battery 150 according to a first reference value in step S107.

Since an external device is connected to the battery holder, when power is supplied to the power line HIGH without the signal change on the USB line, the controller 160 concludes that a recharging adapter TA is connected to the battery holder. That is, the recharging adapter TA is configured to have a signal line D that shorts between first and second signal lines 162 and 164 of the battery holder 100. Therefore, when such a recharging adapter TA is connected to the battery holder 100, the controller 160 can ascertain that a signal change does not occur in the first signal line 162 or the second signal line 164. Therefore, the controller 160 can control the battery holder 100 to recharge the battery 150 based on the first reference value. The first reference value may be the maximum amount of recharging current that can be supplied by the recharging adapter TA.

On the other hand, when a signal change has occurred at step S105, the controller 160 recharges the battery 105 according to a second reference value in step S109.

When power is supplied to the power line HIGH while a signal change is occurring on the USB line, the controller 160 concludes that a laptop computer is connected to the battery holder. That is, the laptop computer is configured to have signal lines that are each connected to first and second signal lines 162 and 164 of the battery holder 100. Therefore, when such a laptop computer is connected to the battery holder 100, a pull up voltage, biased in at least one of the first and second signal lines 162 and 164, is changed into a pull down voltage. Therefore, the controller 160 can ascertain that a laptop computer is currently connected to the battery holder 100. Consequently, the controller 160 can control the battery holder 100 to recharge the battery 150 based on a second reference value, for example, a proper amount of recharging current that can be supplied by the laptop computer.

The controller 160 can adjust the amount of recharging current, step by step, such that the battery 150 is rapidly recharged and, at the same time, the laptop computer is stably operated. More specifically, the controller 160 may control the battery holder 100 to recharge the battery 150 based on the maximum amount of recharging current at the recharging initial stage, which can be supplied by the laptop computer. After that, when the battery 150 has been recharged to a certain level, the controller 160 may control the battery holder 100 to reduce the amount of recharging current, step by step, and to recharge the battery 150 based on the reduced amount. To this end, the controller 160 may further include a signal line to detect recharged power of the battery 150, and elements for adjusting the amount of recharging current step by step, for example, a variable resistor, a plurality of multi-resistors, a switching circuit, a recharging IC circuit, etc.

After that, the controller 160 determines whether the battery 150 is completely recharged in step S111. When the battery 150 is not completely recharged at step S111, the procedure is returned to step S105. It should be understood that the procedure may be returned to step S103 when the battery 150 is not completely recharged at step S111. On the other hand, when the externally connected device is replaced with another one or separated from the battery holder 100 during the recharging operation, the controller 160 controls the battery holder 100 to recharge the battery 150, using the battery recharging method as described above, according to whether power is supplied to the power line HIGH.

In the battery holder and the battery recharging method using the battery holder according to exemplary embodiments of the present invention, when a battery is recharged using other electronic devices other than a recharging adapter, for example a personal computer, the controller is preferably designed in such a way that the resistance in the controller chipset is greater than that of the resistors in the externally connected device. This is because the pull up voltage of the controller 160 can be changed to a pull down voltage only if the resistance of the controller 160 must be greater than that of the externally connected device. For example, when the USB port of the is designed to have a resistance of 15 kΩ, it is preferable that the controller is designed to have a resistance greater than 15 kΩ, for example, 150 kΩ.

As described above, in the battery holder and the battery recharging method using the battery holder according to exemplary embodiments of the present invention, the amount of recharging current is determined according to the type of the externally connected device, and the battery 150 is recharged based on the determined amount of recharging current with the stability of the externally connected device.

As described in the foregoing exemplary embodiments of the present invention, the adaptive battery holder can provide the optimum conditions to the externally connected devices according to their types, thereby properly and safely recharging the batteries.

Although exemplary embodiments of the present invention have been described in detail hereinabove, it should be understood that many variations and modifications of the basic inventive concept herein described, which may be apparent to those skilled in the art, will still fall within the spirit and scope of the exemplary embodiments of the present invention as defined in the appended claims and their equivalents.

## Claims

1. A battery recharging method comprising:
connecting a battery holder to an external device;
detecting a signal change on at least one signal line when the battery holder is connected to the external device;
identifying the type of externally connected device, based on the detected signal change;
setting a recharging condition in the battery holder, according to the identified externally connected device; and
recharging a battery in the battery holder, according to the set recharging condition.

2. The method of claim 1, wherein the connecting of the battery holder to the external device comprises connecting the battery holder to at least one of a laptop computer and a recharging adapter.

3. The method of claim 1, wherein the detecting of the signal change on the at least one signal line comprises detecting a voltage change on the at least one signal line connected to the external device.

4. The method of claim 1, wherein the identifying of the type of externally connected device comprises identify the externally connected device as a recharging adapter when a signal change has not occurred on the at least one signal line.

5. The method of claim 4, wherein the setting of the recharging condition comprises setting the recharging condition so that a battery is recharged based on the maximum amount of recharging current that can be supplied by the recharging adapter.

6. The method of claim 1, wherein the identifying of the type of externally connected device comprises identifying the externally connected device as a laptop computer when a signal change has occurred on the at least one signal line.

7. The method of claim 6, wherein the setting of the recharging condition comprises setting the recharging condition so that a battery is recharged based on at least one of an amount of recharging current that can be supplied by the laptop computer an amount of recharging current that is changed step by step according to the amount of remaining battery charge.

8. A battery recharging system comprising:
an external device that can supply power; and
a battery holder for receiving power from the external device,
wherein the battery holder, connected to the external device, sets a recharging condition according to the type of external device and recharges a battery based on the set recharging condition.

9. The system of claim 8, wherein the battery holder is connected to the external device through a USB line, identifies the type of externally connected device through a voltage change on at least one signal line included in the USB line, identifies the externally connected device as a recharging adapter when the voltage change has not occurred on the at least one signal line, and sets the recharging condition so that the battery is recharged based on the maximum amount of recharging current that can be supplied by the recharging adapter.

10. The system of claim 8, wherein the battery holder is connected to the external device through a USB line, identifies the type of externally connected device through a voltage change on at least one signal line included in the USB line, identifies the externally connected device as a laptop computer when the voltage change has occurred on the at least one signal line, and sets the recharging condition so that the battery is recharged based on a proper amount of recharging current that can be supplied by the laptop computer or so that the battery is recharged by changing the amount of recharging current step by step according to the amount of remaining battery charge.

11. An adaptive battery holder comprising:
signal lines connected to an external device;
a controller for identifying the type of externally connected device according to a signal change on at least one of the signal lines and for setting the recharging condition based on the identified externally connected device; and
a power line for supplying power to the battery according to the set recharging condition.

12. The adaptive battery holder of claim 11, further comprising:
a first resistor, connected to one of the signal lines, for controlling the magnitude of an amount of recharging current externally supplied;
a switch for controlling the connection between the first resistor and the signal line;
a recharging IC for controlling the magnitude of an amount of recharging current supplied from the outside; and
a second resistor for supplying a voltage to the signal line and controlling the magnitude of recharging current, wherein the second resistor is included in the controller.

13. The adaptive battery holder of claim 11, wherein:
the controller identifies the externally connected device as a recharging adapter when a signal change has not occurred on the at least one signal line and sets the maximum amount of recharging current, which can be supplied by the recharging adapter, as a recharging condition; and
the controller identifies the externally connected device as a laptop computer when a signal change has occurred on the at least one signal line and sets a proper amount of recharging current, which can be supplied by the laptop computer, as a recharging condition,
wherein the controller further sets the recharging condition so that the battery is recharged by changing the amount of recharging current step by step according to the amount of remaining battery charge.

14. The adaptive battery holder of claim 12, wherein the first and second resistors have a resistance greater than that of a signal line of the externally connected device connected to the battery holder.

15. The adaptive battery holder of claim 12, further comprising;
a battery connector for connecting to the signal lines and a cable connector for connecting to the power line; and
wherein the controller comprises at least one of a buffer, a filter, a detector and a recharging control part.
